(19) Europäisches Patentamt
European Patent Office
Office européen des brevets

(11) **EP 4 215 644 A1**

(12) **EUROPEAN PATENT APPLICATION**

(43) Date of publication:
**26.07.2023 Bulletin 2023/30**

(21) Application number: **22152216.2**

(22) Date of filing: **19.01.2022**

(51) International Patent Classification (IPC):
*C25B 1/04* (2021.01)   *C25B 11/052* (2021.01)
*C25B 11/054* (2021.01)   *C25B 11/061* (2021.01)
*C25B 11/075* (2021.01)   *B01J 23/755* (2006.01)
*C01B 35/04* (2006.01)   *B01J 35/00* (2006.01)
*B01J 37/02* (2006.01)   *B01J 37/08* (2006.01)
*B01J 37/34* (2006.01)

(52) Cooperative Patent Classification (CPC):
**C25B 1/04; B01J 23/755; B01J 35/0033;
B01J 37/0225; B01J 37/082; B01J 37/34;
C25B 11/052; C25B 11/054; C25B 11/061;
C25B 11/075**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Max-Planck-Institut für
Chemische Physik fester Stoffe
01187 Dresden (DE)**

(72) Inventors:
• **ANTONYSHYN, Irina
01187 Dresden (DE)**

• **HÖHN, Peter
01187 Dresden (DE)**
• **SCHMIDT, Marcus
01187 Dresden (DE)**
• **SCHLÖGL, Robert
01187 Dresden (DE)**
• **GRIN, Juri
01187 Dresden (DE)**

(74) Representative: **Hoffmann Eitle
Patent- und Rechtsanwälte PartmbB
Arabellastraße 30
81925 München (DE)**

(54) **METHOD OF FORMING A CATALYTICALLY ACTIVE MATERIAL FOR ELECTROCHEMICAL ENERGY CONVERSION**

(57)   The present invention relates to a method of forming a catalytically active material on a two- or three-dimensional current carrier by a step of contacting the current carrier comprising a transition metal with gaseous boron halide. It is also concerned with an electrode comprising the catalytically active material on a two- or three-dimensional current carrier and an electrolyzer comprising the electrode. Moreover, the invention relates to a method of catalysis using the catalytically active material on the current carrier.

Fig. 3

**EP 4 215 644 A1**

## Description

### Technical Field

The present invention relates to a method of forming a catalytically active material for use on an industrial scale. The method comprises a step of contacting and reacting a gaseous boron halide with a two- or three-dimensional current carrier comprising a transition metal (e.g. a pure transition metal, an alloy or an intermetallic compound) in a heated state. Furthermore, the present invention is directed to an electrode comprising the catalytically active material on the current carrier and to an electrolyzer comprising the electrode. The present invention is also concerned with a method of catalysis using the catalytically active material, the electrode or the electrolyzer.

### Background Art

Moving from the fossil fuel-based energy infrastructure to an environmentally friendly and resource-saving one cannot be achieved without renewable energy sources and infrastructure based on hydrogen as an energy carrier molecule. Among the various ways to produce hydrogen, water electrolysis is one of the most promising routes. The use of energy obtained from renewable sources to produce hydrogen therefore represents a key step in the deployment of hydrogen to tackle climate change.

Nowadays, different variants of electrocatalytic water splitting (EWS) are considered for large-scale application using: alkaline electrolysers (AELs), solid-oxide electrolysers (SOELs) and (semi)solid polymer electrolysers (SPELs). The latter can be realized in proton exchange membrane (PEM), anion-exchange membrane (AEM) or bipolar membrane (BPM) electrolysers (A. Serov et al., Johnson Matthey Technol. Rev. 2021, 65, 207). However, independently of the type of electrolyser, EWS includes two half-reactions, namely the oxygen evolution reaction (OER) at the anode and the hydrogen evolution reaction (HER) at the cathode. The sluggish kinetics of the OER is responsible for the high overpotential requirement using state-of-the-art electrocatalyst materials that results in the current low efficiency of EWS. Moreover, the system often requires expensive platinum group metals as electrocatalysts. High production efficiency, chemical and mechanical stability over a long period of time, robustness and simplicity of synthesis are further crucial characteristics for the application of electrocatalysts on an industrial scale. These requirements have impeded the introduction of EWS to a wider market to date (T. Reier et al., Adv. Energy Mater. 2017, 7, 1601275).

Typical OER electrocatalysts for the alkaline water electrolysis on an industrial scale are therefore based on inexpensive metals such as nickel (US 2012/0152734). However, activity of many such catalysts is limited. Accordingly, there is a requirement for the development of new water splitting electrocatalysts that have improved activity and ideally long-term stability, which are suitable for industrial applications.

In the past decade much work has been carried out into improving the properties of electrocatalysts. A large number of non-noble materials, including layered double hydroxides, perovskites, spinels, multi-metallic oxides and others, have been developed for alkaline electrolysis. Among non-oxide OER electrocatalysts, Co-, Ni- and Fe-based borides were considered to be promising materials (F. Guo et al., Energy Environ. Sci. 2019, 12, 684). The chemistry of borides is incredibly rich in terms of structural motifs, characterized by strong covalent boron-boron and boron-metal interactions, leading to diverse chemical and physical properties and, correspondingly, a wide range of possible applications. Although these materials have shown some improvements at laboratory scale, they are not yet suitable for industrial applications for a variety of reasons. Firstly, upscaling the synthesis of these materials to deploy on the large scales required in industry remains a significant challenge. For example, the solid-state synthesis relied on in Guo et al. cited above is suitable for the synthesis of small amounts only and cannot be carried out on a large scale. Moreover, large scale deposition on current carriers is challenging. Also, when using such materials, the shape of the current carrier is heavily restricted when used on an industrial scale, since the active material has to be fixed to the current carrier which is challenging with complex shapes. Moreover, most of the borides that are of interest in the synthesis of OER electrocatalyst materials have high melting temperatures. Their conventional syntheses are therefore usually accompanied by the introduction of chemical impurities, e.g. during the reaction itself or by side reactions (e.g. with crucible materials). These impurities lead to a change in the properties of borides that are of interest in OER electrocatalyst materials. Moreover, such impurities lead to a contamination of the electrolyte during the electrolysis. The replacement of the electrolyte following contamination is not preferable in terms of production efficiency.

### Technical Problem

There is a demand for a method of forming a catalytically active material that is substantially free from impurities on a current carrier on an industrial scale that is applicable to a wide range of transition metals as well as suitable electrode shapes. Thus, there is a need for an approach allowing the provision of highly stable and robust catalytically active materials having improved properties in catalysis and being adaptable to the desired needs within catalysis.

Moreover, the method should allow provision of the catalytically active material on the current carrier on a large scale at high efficiency and in a simple manner.

There is also a demand for an electrode comprising the catalytically active material and an electrolyzer comprising the electrode. Further, there is a need for a method of catalysis using the catalytically active material, the electrode or the electrolyzer as well as the use in catalysis of the same products.

## Summary of the Invention

The present invention solves the above problems by providing a method of forming a catalytically active material on a two- or three-dimensional current carrier. The method has a step of contacting the solid transition metal-comprising current carrier in a heated state with a gaseous boron halide. This results in a heterogenous reaction (gas-solid) forming a phase pure transition metal boride as active material.

The method according to the invention significantly reduces the amount of impurities in the borides. Thus, an influence of impurities on the chemical and physical properties of the boride is prevented. Moreover, since the catalyst is directly formed on the surface of the current carrier, no binder is necessary. Using a binder for fixing a separately prepared catalytically active material on an electrode surface causes not only a further source of impurities, it also requires an extra component in the system, and additional production steps. The method described in the following therefore provides a simple and efficient way of providing a metal boride-based active material showing improved activity and stability within catalysis.

Moreover, as no other components are present, it has been found that the mechanical stability, the chemical stability and the lifetime of an electrode comprising one or more borides depend only on the contact between the current carrier and the catalytically active material. Hence, the method of the present invention provides a system for use in catalysis that is easy to control.

The method of the present invention allows the provision of a wide range of transition metal borides as catalytically active materials. In particular, different compositions and crystal structures of borides as well as a wide range in thickness and microstructure of the boride layer formed on the current carrier can be achieved by the method of the present invention. Furthermore, the method is suitable for industrial applications as it can readily be carried out on a large scale. This is due to the high tolerance of the reaction for varying the reactants to use different transition metals and boron halides. The gas-solid reaction also allows using sophisticated shapes as current carriers.

In the present invention it has also been found that various methods of heterogenous catalysis (gas-solid or liquid-solid) can be provided using the wide range of catalytically active materials formed by the method described herein. These methods can also be carried out by the electrode comprising the active material or an electrolyzer comprising the electrode in catalysis, also described herein.

The invention encompasses the following embodiments:

Embodiment 1. A method of forming a catalytically active material on a two- or three-dimensional current carrier,

wherein the current carrier comprises a transition metal,
wherein the method comprises a step of contacting the current carrier in a heated state with gaseous boron halide to react the boron halide with the transition metal.

Embodiment 2. The method of embodiment 1, wherein the current carrier is a sheet, a lattice, a network, a foam or a gauze.

Embodiment 3. The method of embodiment 1 or 2, wherein the current carrier has a surface area of 100 cm$^2$ or more.

Embodiment 4. The method of embodiment 1, 2, or 3, wherein

a) the current carrier is heated by an electrical current, and/or
b) the temperature of the current carrier is 500 - 2000 °C, optionally 800 - 1200 °C.

Embodiment 5. The method of embodiment 1, 2, 3, or 4, wherein

a) the boron halide has a vapour pressure of 1 mbar -1 bar,

the boron halide is optionally present in a mixture with an inert gas, and
the inert gas optionally has a vapour pressure of 1 mbar - 1 bar; and/or

b) the current carrier is exposed to the gaseous boron halide for 5 seconds - 220 minutes.

Embodiment 6. The method of embodiment 1, 2, 3, 4, or 5, wherein

a) the method is continuous; and/or
b) the method is carried out in a single step; and/or
c) the method does not use a binder; and/or
d) the method does not use a crucible.

Embodiment 7. The method of embodiment 1, 2, 3, 4, 5, or 6, wherein

a) the catalytically active material comprises one or more transition metal borides; and/or
b) the catalytically active material is impurity-free; and/or
c) the catalytically active material is present as a layer on the current carrier, wherein the layer is optionally 0.1 - 500 $\mu$m thick.

Embodiment 8. The method of embodiment 1, 2, 3, 4, 5, 6, or 7 wherein:

a) the transition metal is one or more elements selected from groups 3 to 12 of the periodic table of elements, more preferably one or more selected from Ni, Hf, W, Co, Fe, Mo, Ti, Zr, Nb, Ta; and/or
b) the boron halide is one or more selected from $BCl_3$, $BBr_3$, and $BI_3$; and/or
c) the catalytically active material comprises one or more selected from $M_3B$, $M_2B$, $M_4B_3$, MB, and $MB_2$, wherein M is the transition metal;
optionally wherein the catalytically active material comprises one or more selected from $Ni_3B$, $Ni_2B$, $Ni_4B_3$, and NiB.

Embodiment 9. An electrode comprising a catalytically active material on a two- or three-dimensional current carrier,

wherein the current carrier has a surface area of 100 $cm^2$ or more,
wherein the current carrier comprises a transition metal,
wherein the catalytically active material is impurity-free and comprises one or more transition metal borides.

Embodiment 10. The electrode according to embodiment 9, wherein

a) the current carrier is a sheet, a lattice, a network, a foam or a gauze; and/or
b) the catalytically active material forms a layer on the current carrier, wherein the layer is optionally 0.1 - 500 $\mu$m thick; and/or
c) the electrode does not comprise a binder.

Embodiment 11. The electrode of embodiment 9 or 10 wherein:

a) the transition metal is one or more selected from Ni, Hf, W, Co, Fe, Mo, Ti, Zr, Nb, Ta; and/or
b) the catalytically active material comprises one or more selected from the group of $M_3B$, $M_2B$, $M_4B_3$, MB, $MB_2$, wherein M is the transition metal,

optionally wherein the catalytically active material comprises one or more selected from $Ni_3B$, $Ni_2B$, $Ni_4B_3$, or NiB.

Embodiment 12. An electrolyzer comprising the catalytically active material on a current carrier of embodiment 1, 2, 3, 4, 5, 6, 7, or 8, or the electrode of embodiment 9, 10, or 11.

Embodiment 13. Method of catalysis using

the catalytically active material on the current carrier of embodiment 1, 2, 3, 4, 5, 6, 7, or 8;
the electrode of embodiment 9, 10, or 11; or
the electrolyzer of embodiment 12;
wherein the method comprises the step of contacting the catalytically active material with one or more reactants while passing current through the current carrier.

Embodiment 14. Use in catalysis of the catalytically active material on a current carrier in embodiment 1, 2, 3, 4, 5, 6, 7, or 8; the electrode of embodiment 9, 10, or 11; or the electrolyzer of embodiment 12.

Embodiment 15. The method of embodiment 13 or the use of embodiment 14 wherein the catalysis comprises the oxygen evolution reaction.

Where the present description refers to "preferred" embodiments/features, combinations of these "preferred" embodiments/features shall also be deemed as disclosed as long as this combination of "preferred" embodiments/features is technically meaningful.

Hereinafter, the use of the term "comprising" should be understood as disclosing, as a more restricted embodiment, the term "consisting of" as well, as long as this is technically meaningful.

Where the present description refers to features using the term "to a certain degree", values and statements specifying these features are not restricted to their absolute magnitude but are to be seen in the context of other values and statements mentioned in the same context.

Where the description refers to a ratio of x:y e.g. 1:2, this can be read also as the corresponding number e.g. 1/2 = 0.5. Hence, a lower ratio of x:y would be one in which the y is relatively larger than x than in the first ratio, e.g. 1:3 is a lower x:y ratio than 1:2. The same applies to ratios x:y:z. Hence, a lower ratio of x:y:z would be one in which the y and/or z is relatively larger than x than in the first ratio.

**Brief Description of Figures**

**Fig. 1:** PXRD pattern of Sample 1 (reflections of $Ni_3B$ correlate with dashed reference lines and reflections of elemental Ni are labelled by Miller indices 111, 200, 220, 311 and 222) and BSE image (inset) of a cross section of Sample 1.

**Fig. 2:** BSE image and elemental mapping (5 kV, material contrast) of cross section of Sample 1 after electrochemical experiment.

**Fig. 3:** Comparison of OER activity, represented by linear sweep voltammetry (LSV) curves, of Comparative Sample 1 and Sample 1.

**Fig. 4:** Comparison of PXRD results of Sample 1 before and after electrochemical experiment.

**Detailed Description of the Invention**

The present invention relates to a method of forming a catalytically active material on a two-or three-dimensional current carrier. The catalytically active material is described in greater detail below. The term "catalytically active material" as used herein is synonymous with the term "catalyst". It refers to a material which is capable of increasing the rate of a chemical reaction without modifying the overall standard Gibbs energy change in the reaction. Catalysts are not consumed in a reaction but can act repeatedly. Catalysis can be classified as homogeneous catalysis, in which only one state of matter (gas, liquid or solid) is involved, and heterogeneous catalysis, in which the reaction occurs at an interface between different states of matter. The catalytically active material that is formed by the method of the present invention may preferably be used in a heterogeneous catalysis as described below.

In the method of the present invention, the catalytically active material is formed on a two- or three-dimensional current carrier that comprises a transition metal. The term "current carrier" as used herein refers to a solid which conducts electricity. "Conductivity" as used herein refers to the degree to which a specific material conducts electricity, calculated as the ratio of the current density in the material to the electric field which causes the flow of current. The current carrier of the present invention preferably has a conductivity of above $10^5$ S/m.

The term "metal" as used herein refers to elements that are present in the oxidation state 0. The term "transition metal" as used herein refers to the elements in groups 3 to 12 of the periodic table of elements.

The current carrier that comprises a transition metal according to the present invention may be a pure transition metal or a material comprising two or more transition metals, e.g. an alloy or an intermetallic compound, wherein at least one of these elements is a transition metal. While an alloy may be described as a mixture of the different elements without an ordered structure, an intermetallic compound is a mixture having an ordered structure. In other words, in an intermetallic compound, the elements occupy the defined positions in the crystal structure. The crystal structures of intermetallic compounds differ from those of their constituents.

The present invention specifies the formation or presence of the catalytically active material "on" the current carrier. This means the catalytically active material is made on and also from the current carrier by the method of the invention as described in greater detail below. After the formation, in the finished electrode described below, it means the catalytically active material is in direct contact with the current carrier. Direct contact means that no additional layer, e.g. no binder layer is present between the active material and the current carrier. A "binder" as used herein refers to any adhesive material suitable to connect materials. The chemical composition of a binder depends on the composition of the substrates that are to be connected. A formation of the catalytically active material directly on the current carrier may be beneficial in terms of an absence of the additional interface in the system and as a result of improved production efficiency.

The terms "two-dimensional" or "three-dimensional" as used herein refer to shapes that are defined by a certain degree of extension of two or three of the dimensions height, length and width. In a two-dimensional shape, a body is extended in its width and length relative to its height. Three-dimensional in the sense of the present invention is fulfilled by a body that is extended in all three dimensions of width, length, and height. To give specific examples, a wire represents a body which is extended in only one dimension, i.e. along the length of the wire. A sheet, a gauze, or a lattice as defined below are two dimensional. A network or a foam as described below are three-dimensional. Taking into account the previous explanation, the dimensionality may for further exemplification be described by the aspect ratios of bodies. In a two-dimensional shape the aspect ratio (h:l:w) between height (h), length (l) and width (w) may be at most 1:3:3, preferably at most 1:5:5, and more preferably at most 1:10:10. Within these aspect ratio limits the length and the width may be varied independently from each other, excluding a situation wherein only one of the length and the width is excessively extended as this would result in one-dimensionality. In a three-dimensional shape, the aspect ratio between the three dimensions may be above 1:3:3, preferably above 1:2:2, more preferably above 1:1.5:1.5. Within these aspect ratio limits the three dimensions may be varied independently from each other, excluding a situation wherein only one of the dimensions is excessively shortened as this would result in one-dimensionality. Most preferably the aspect ratio of three dimensions may be about 1:1:1 in a three-dimensional shape.

The method of the present invention comprises or consists of a step of contacting the current carrier in a heated state with gaseous boron halide to react the boron halide with the transition metal. The catalytically active material is formed by a step of contacting the current carrier in a heated state with a gaseous boron halide $BHal_3$. Contacting means that the gaseous boron halide is in the atmosphere around the current carrier. The halide group in "$Hal_3$" may comprise one or more selected from F, Cl, Br and I; preferably one or more selected from Cl, Br and I; more preferably the halide group may comprise one selected from Cl, Br and I and most preferably the halide group may be Br. This step initiates a heterogeneous reaction between the gaseous boron halide and the solid current carrier that results in the formation of the catalytically active material on the current carrier according to Equation (1) below. The current carrier may be placed in a reaction vessel, e.g. a quartz tube, for the contacting with gaseous boron halide. The method may optionally further comprise an evaporation step, a washing step or both to remove the gaseous reactant, other possible reaction products or both.

The current carrier that is used in the method of present invention may have any two- or three-dimensional shape. Preferably, the current carrier may be a sheet, a gauze, a lattice, a network or a foam. More preferably, the current carrier may be in the form a sheet, a gauze or a foam. More preferably, the current carrier may be in the form a sheet or a gauze. A sheet is a two-dimensional shape not having cavities therein. A gauze is a two-dimensional shape formed by wires crossing each other in a disordered fashion to form cavities within the shape. A lattice is a two-dimensional shape made of wires connected to each other in an ordered arrangement to form regular cavities. A network is a three-dimensional shape and is several gauzes and/or lattices that are layered and interconnected. A foam is a three-dimensional shape and is a solid foam which is a shape made of a solid comprising bubble-like cavities within the solid. The cavities may be sealed or open and interconnected. Preferably at least 50%; and more preferably at least 75% of the total number of cavities may be open. A foam is generally characterised by its high porosity of between 99 - 60%, preferably between 95 - 70% based on the cavity volume compared to the total volume taken up by the foam. The porosity of a foam may be measured by any suitable methods. For instance, the porosity may be measured by mercury porosity according to DIN ISO 15901-1:2019-03.

As can be appreciated from the foregoing, the invention also relates to a method of forming a catalytically active material on a current carrier which is a sheet, a lattice, a network, a foam or a gauze, wherein the current carrier comprises a transition metal, wherein the method comprises a step of contacting the current carrier in a heated state with gaseous boron halide to react the boron halide with the transition metal. It also relates to an electrode comprising a catalytically active material on a current carrier which is a sheet, a lattice, a network, a foam or a gauze, wherein the current carrier has a surface area of 100 $cm^2$ or more, wherein the current carrier comprises a transition metal, wherein the catalytically active material is impurity-free and comprises one or more transition metal borides. The invention also concerns an electrolyzer comprising the catalytically active material or the electrode described earlier in this paragraph, as well as a method of catalysis using this catalytically active material, electrode or electrolyzer, wherein the method comprises the step of contacting the catalytically active material with one or more reactants while passing current through the current carrier. It also relates to the use in catalysis of the catalytically active material as already described in this paragraph.

The method of the present invention allows the provision of a catalytically active material suitable in large-scale applications. In electrocatalysis, an electrode area of about 150 cm$^2$ should be used to produce 1 kW energy. The surface area of the current carrier may vary depending on its shape as described above. The surface area as used herein is the projected geometrical surface area of the current carrier. It may be determined by measuring the dimensions of the exposed surfaces of the current carrier and calculating the overall surface area. For example, the projected geometrical surface area of a foam in the shape of a cube is calculated simply by multiplying the length by the width of the cube to determine the surface area of each face of the cube, and adding together the surface areas of each face to arrive at the projected geometrical surface area of the cube. The surface area of the current carrier may be greater than 100 cm$^2$, preferably greater than 500 cm$^2$, preferably greater than 1000 cm$^2$, preferably greater than 0.5 m$^2$, preferably greater than 1 m$^2$ and most preferably greater than 3 m$^2$.

In the method of forming a catalytically active material according to the present invention, the current carrier may preferably be heated by an electrical current. The current carrier may for instance be placed into an induction furnace. An induction furnace comprises a nonconductive crucible (such as a quartz tube) holding the current carrier, which is surrounded by a coil through which an alternating current flows. The coil creates a rapidly reversing magnetic field that penetrates the current carrier. The magnetic field induces eddy currents (circular electric currents) inside the current carrier by electromagnetic induction. The eddy currents, flowing through the electrical resistance of the current carrier, heat it by Joule heating. In another example of heating by an electrical current, the current carrier may be connected to electrical contacts to complete an electric circuit. An alternating current or a direct current of 1 to 10 A may be used to heat the current carrier. This option allows synthesis without any direct contact to the walls of a reaction vessel.

The synthesis may also be carried out without a crucible. A "crucible" as used herein is a container in which substances, e.g. metals, can be melted or heated to very high temperatures. Without wishing to be bound by theory, it is postulated that separation of the heated current carrier from other non-reactant materials in the heating step may be beneficial as it decreases the possibility of side reactions with such materials leading to impurities as defined below. If a crucible is used in the heating step, the crucible may be inert under the reaction conditions. Where a crucible is used it is preferably a glassy carbon crucible.

The temperature of the current carrier upon contact with gaseous boron halide influences the composition of the catalytically active material. The temperature of the current carrier may be within a range of 500 - 2000 °C, preferably 600 - 1800 °C, more preferably 700 - 1600 °C and most preferably 800 - 1200 °C. In a particularly preferred embodiment of the present invention, the temperature of the current carrier is 800 °C. The temperature may be measured by using a pyrometer.

When forming the catalytically active material by contacting the heated current carrier with gaseous boron halide, the partial pressure of the gaseous boron halide may be controlled. In the following, the term "partial pressure" is synonymous with the term "vapour pressure". The partial pressure of the boron halide atmosphere may influence the composition and thickness of the catalytically active material. The pressure of the gaseous boron halide may be within a range of 1 mbar- 1 bar, preferably 0.05 bar - 0.5 bar and more preferably 0.09 bar-0.2 bar. Alternatively, and according to a more preferred embodiment of the present invention, the reaction may be controlled by duration of exposure of the heated current carrier to the gaseous boron halide. After evacuation, preferably up to about 5*10$^{-3}$ mbar, the heated current carrier may be contacted with the gaseous boron halide for 1-30 seconds, preferably 2 - 20 seconds and most preferably 5 - 10 seconds, followed by evacuation in order to remove the gaseous boron halide. This operation is preferably repeated two or more times.

The boron halide may be used alone or in a mixture with an inert gas. Without wishing to be bound by theory, the presence of an inert gas may lead to the reaction proceeding less vehemently than in a pure boron halide atmosphere. Any suitable inert gas may be used in the method of the present invention. Exemplary inert gases are nitrogen or argon, preferably argon is used. The vapour pressure of the inert gas may optionally be in the range of 1 mbar - 1 bar, preferably 0.05 bar - 0.5 bar and more preferably 0.09 bar - 0.2 bar depending on the starting materials and the desired materials. In a more preferred embodiment of the present invention, the gaseous boron halide is used without an inert gas.

Moreover, when contacting the heated current carrier with a gaseous boron halide in the method of the invention, the current carrier may be exposed to the gaseous boron halide for 1 second to 220 minutes, preferably for 10 seconds to 200 minutes, preferably for 30 seconds to 180 minutes, preferably for 1 minute to 120 minutes and preferably for 2 to 60 minutes. The contacting time may be varied together with the partial pressure of the halide and the temperature of the current carrier to influence the composition and thickness of the catalytically active material. The heated current carrier may be contacted one, two, three or more times with the gaseous boron halide, optionally with an evaporation or washing step in between. In a particularly preferred embodiment of the present invention, the heated current carrier is exposed to a gaseous boron halide three times for 5 - 10 seconds followed by an evacuation step.

The present method of reacting the boron halide with the transition metal of the current carrier may be, each independently from another or in any combination: continuous; carried out in a single step; without the use a binder or without the use of a crucible. In a particularly preferred embodiment, the method according to the present invention allows the direct formation of a catalytically active material on the current carrier without the necessity of an additional binder or a crucible. The product of the method may therefore consist of the two-or three-dimensional current carrier and the catalytically active material.

The catalytically active material that is formed by the method of the present invention may comprise one or more transition metal borides. A metal boride in the sense of the present invention is a compound comprising or consisting of boron (B) and a less electronegative transition metal (M). Metal borides wherein the ratio of metal atoms to boron atoms is 1:4 or less, e.g. $MB_5$, $MB_6$ and so on up to $MB_{66}$ for $YB_{66}$, are classified as boron-rich. Borides wherein the ratio of metal atoms to boron atoms is more than 1:4, e.g. $MB_3$, $MB_2$, $MB$, $M_4B_3$, $M_2B$, $M_3B$ and so on, are classified as metal-rich. Metal-rich borides have high melting temperatures, an extreme hardness, a high chemical resistance and mechanical stability. In the present invention metal-rich borides are preferred within the catalytically active material as their properties are of high interest in catalytic applications as described in detail below.

Without wishing to be bound by any theory, the formation of a transition metal borides according to the method of the present invention by the heterogeneous reaction between the gaseous boron halide $BHal_3$ and a transition metal M within the current carrier may be described by the following Equation (1), wherein x is a number from 0.5 to 9, y is 1, 2 or 3 and z is 1, 2, 3 or 4:

$$(x+z)\, M\,(s) + y\, BHal_3\,(g) \rightarrow x\, MHal_{3y/x}\,(g) + M_zB_y\,(s) \tag{1}$$

Accordingly, the amount, composition and number of different metal boride species in the catalytically active material made by the method of the present invention depends on a number of parameters. The formation of the metal borides may be influenced by the composition of the current carrier, the contacting time with the gaseous boron, the partial pressure of the gas as well as the reaction temperature. Moreover, the number of different metal borides in the catalytically active material of the present invention may depend on the composition of the current carrier consisting of a pure transition metal or a material comprising two or more transition metals, e.g. an alloy or an intermetallic compound as specified above.

The catalytically active material that is formed by the method of the present invention as defined in detail above may be impurity-free. The term "impurity-free" as used herein refers to a material that comprises less than 5 mass %, preferably less than 2 mass %, more preferably less than 1 mass % and most preferably less than 0.5 mass % impurities. The purity of the catalytically active material according to the present invention results from the method described herein. A very small residue of impurities within the catalytically active material of the present invention may result from traces of e.g. water or side products in the system. The catalytically active material formed by the method of the present invention may also be single-phase, meaning that it contains only one transition metal boride with defined crystal structure. Furthermore, the catalytically active material formed by the method of the present invention may also be impurity-free and single-phase, meaning that the material is both impurity-free as defined above and contains only one transition metal boride.

The term "impurity" as used herein in context with the catalytically active material comprises components and phases other than one or more transition metal boride phases as defined above. Without wishing to be bound by any theory, impurities as defined herein may result from a contamination during conventional synthesis methods, for instance side reactions with the parts of the experimental setup. Exemplary reasons for side reactions involve contaminated reactants, as well as reactions with crucibles. In particular, impurities in the form of oxides and carbides may have a strong impact on the desired properties of the metal-rich borides described above. Whereas carbides may result from crucibles, oxides may result from impurities within the reactants or from the direct contact with the quartz tube. A potential contamination of the borides with metal halides $MHal_{3y/x}$, formed as a by-product as shown in Equation (1) above, may be excluded by applying the further evaporation and/or washing steps mentioned above.

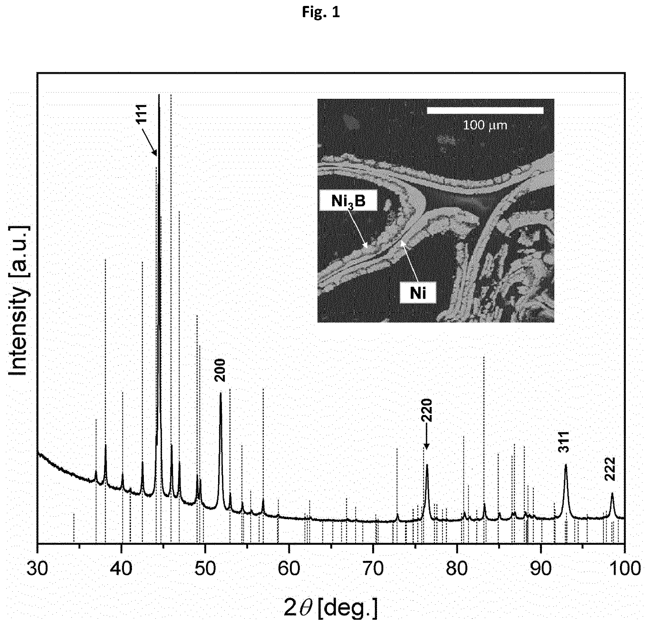

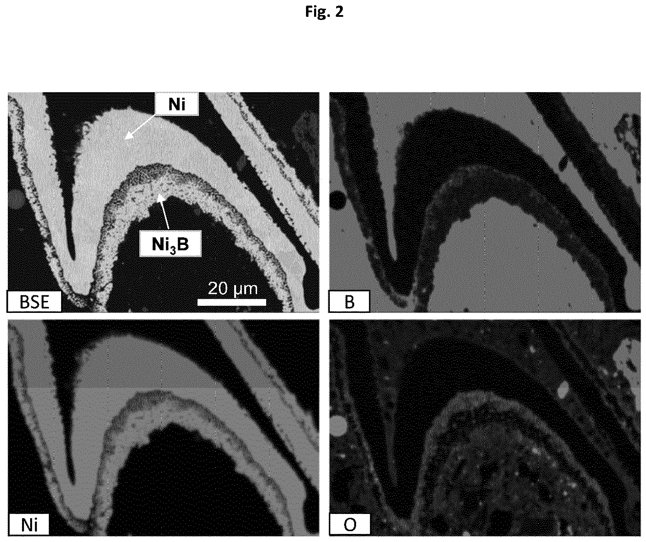

In the present invention the number of phases in the catalytically active material may be determined by using powder X-ray diffraction (PXRD) in combination with scanning electron microscopy (SEM) and energy dispersive X-ray spectroscopy (EDXS). Comparing the experimental PXRD patterns of the studied materials with database data or theoretically calculated diffraction patterns allows a qualitative and quantitative identification of crystalline phases (see Fig. 1). The presence of amorphous materials may also be indicated from PXRD data. SEM optionally combined with EDXS allows a qualitative and quantitative analysis of different phases (see Fig. 2). The analytical methods that are used herein are described in the Experimental Part below in detail.

The catalytically active material that is formed by the method of the present invention as defined in detail above may be formed as a layer on the current carrier. The expression "layer" as used herein means that the catalytically active material is spread over at least a part of the current carrier surface to cover it. Without wishing to be bound by theory, as the catalytically active material is formed by contacting the solid current carrier with gaseous boron halide in a heterogeneous reaction, the reaction begins at the solid/gaseous interface. Consequently, the outer layer of the current carrier reacts with the gaseous boron halide and a layer of the catalytically active material is formed on the surface of the current carrier according to Equation (1) above. As the reaction time progresses, the thickness of this layer may increase.

The preferred thickness of the metal boride layer depends on its role in catalysis and may be adapted to the needs of a respective application. For example, the layer may not only act as an active layer but, without wishing to be bound by any theory, may also act as an additional protective layer improving the electrode stability upon catalysis as some metal borides may have a lower stability under reaction conditions than others. Depending on the desired application, the layer of the catalytically active material may therefore optionally have a thickness of 0.1 - 500 $\mu$m, 0.2 - 100 $\mu$m, 0.5 - 20 $\mu$m or 1 - 10 $\mu$m. In a particularly preferred embodiment of the present invention the layer of the catalytically active material is 1 - 10 $\mu$m thick.

The catalytically active material that is formed by the method of the present invention as defined in detail above may, each independently from another or in any combination, comprise one or more metal borides; be impurity-free; and be present as a layer on the current carrier, each as specified above.

The transition metal that is used in the method of the present invention is not particularly limited. Preferably, transition metals as used herein may comprise one or more elements selected from groups 3 to 12 of the periodic table of elements, more preferably one or more selected from Ni, Hf, W, Co, Fe, Mo, Ti, Zr, Nb, Ta. In a preferred embodiment, the transition metal may be Ni. Where more than one element is present in the current carrier of the present invention, they may be present as an alloy or an intermetallic compound.

Besides or in addition to the embodiment mentioned before, the boron halide that is used in the method of the present invention may be one or more selected from $BCl_3$, $BBr_3$, and $BI_3$. In a preferred embodiment, the boron halide may be $BBr_3$.

Besides or in addition to any or both of the two embodiments mentioned before, the catalytically active material that is formed by the method of the present invention may comprise one or more transition metal borides selected from metal-rich borides having a ratio of metal atoms to boron atoms of more than 1:4. Without wishing to be bound by any theory, the preference for a particular metal boride stoichiometry may vary depending on the application. In a preferred embodiment of the invention, the catalytically active material may comprise one or more selected from $M_{10}B_8$, $M_{23}B_6$, $M_5B_6$, $M_5B_{16}$, $M_4B_3$, $M_4B_{15}$, $M_3B$, $M_3B_2$, $M_3B_4$, $M_2B$, $M_2B_3$, $M_2B_4$, $M_2B_5$, MB, $MB_2$, and $M_7B_3$; more preferably one or more selected from $M_4B_3$, $M_3B$, $M_2B$, MB, and $MB_2$, wherein M is the transition metal as defined above. Where more than one different metal borides are present in the catalytically active material of the present invention, e.g. when using a current carrier consisting of an alloy or an intermetallic compound as specified above, the catalytically active material may also comprise ternary or even quaternary borides. In another preferred embodiment, the catalytically active material may comprise one or more selected from $Ni_7B_3$, $Ni_3B$, $Ni_2B$, $Ni_4B_3$, NiB, and $NiB_2$; $Hf_3B$, $Hf_2B$, $Hf_4B_3$, HfB, and $HfB_2$; $W_3B$, $W_2B$, $W_2B_5$, $W_4B_3$, $W_4B_{15}$, WB, and $WB_2$; $Co_3B$, $Co_2B$, $Co_4B_3$, $Co_5B_{16}$, $Co_{23}B_6$, CoB, and $CoB_2$; $Fe_3B$, $Fe_2B$, $Fe_4B_3$, FeB, $FeB_2$, and $Fe_2B_7$; $Mo_3B$, $Mo_2B$, $Mo_2B_4$, $Mo_2B_5$, $Mo_3B_2$, $Mo_4B_3$, $Mo_4B_{15}$, MoB, and $MoB_2$; $Ti_3B$, $Ti_2B$, $Ti_3B_4$, $Ti_4B_3$, TiB, and $TiB_2$; ZrB, and $ZrB_2$; $Nb_3B$, $Nb_2B$, $Nb_4B_3$, $Nb_2B_3$, $Nb_3B_2$, $Nb_3B_4$, $Nb_5B_6$, NbB, and $NbB_2$; or $Ta_3B$, $Ta_3B_2$, $Ta_3B_4$, $Ta_5B_6$, $Ta_2B$, $Ta_4B_3$, TaB, and $TaB_2$; more preferably, the catalytically active material may comprise one or more selected from $Ni_3B$, $Ni_2B$, $Ni_4B_3$, and NiB, most preferably $Ni_3B$. Where more than one different transition metal is present in the current carrier of the present invention, they may be present as an alloy or an intermetallic compound, and may deliver catalytically active material comprising ternary or quaternary borides.

Preferably, the transition metal is one or more selected from Ni, Hf, W, Co, Fe, Mo, Ti, Zr, Nb, Ta; the boron halide is one or more selected from $BCl3$, $BBr_3$, and $BI_3$ and the catalytically active material comprises one or more selected from $Ni_3B$, $Ni_2B$, $Ni_4B_3$, NiB, and $NiB_2$; $Hf_3B$, $Hf_2B$, $Hf_4B_3$, HfB, and $HfB_2$; $W_3B$, $W_2B$, $W_4B_3$, WB, and $WB_2$; $Co_3B$, $Co_2B$, $Co_4B_3$, CoB, and $CoB_2$; $Fe_3B$, $Fe_2B$, $Fe_4B_3$, FeB, and $FeB_2$; $Mo_3B$, $Mo_2B$, $Mo_4B_3$, MoB, and $MoB_2$; $Ti_3B$, $Ti_2B$, $Ti_4B_3$, TiB, and $TiB_2$; $Zr_3B$, $Zr_2B$, $Zr_4B_3$, ZrB, and $ZrB_2$; $Nb_3B$, $Nb_2B$, $Nb_4B_3$, NbB, and $NbB_2$; or $Ta_3B$, $Ta_2B$, $Ta_4B_3$, TaB, and $TaB_2$.

In a particularly preferred embodiment of the present invention, the transition metal may be Ni, the boron halide may be $BBr_3$ and the catalytically active material comprises one or more selected from $Ni_3B$, $Ni_2B$, $Ni_4B_3$, and NiB, most preferably $Ni_3B$.

In an even more particularly preferred embodiment of the method of the present invention, a impurity-free catalytically active material layer having a thickness of 1 - 10 $\mu$m comprising $Ni_3B$ is formed directly, in a single step and without the use of a binder or a crucible on a current carrier metal foam comprising Ni, having a surface area of greater than 100 cm$^2$, preferably greater than 500 cm$^2$, preferably greater than 1000 cm$^2$, preferably greater than 0.5 m$^2$, preferably greater than 1 m$^2$ and most preferably greater than 3 m$^2$ by contacting the current carrier heated to 800 °C with $BBr_3$ for 5 - 10 seconds, preferably followed by an evaporation step, and repeating this process two further times.

Another aspect of the present invention relates to an electrode comprising a catalytically active material on a two- or three-dimensional current carrier. This can be made using the method described above. The electrode of the present invention may serve as a cathode, thus being the site of reduction reactions, or as an anode, thus being the site of oxidation reactions. Preferably, the electrode is used as an anode and most preferably as an anode in the OER, i.e. for the evolution of oxygen, which is a half-reaction of EWS.

The electrode of the present invention is particularly suitable for use in large-scale electrolysis. In the electrode, the current carrier described in detail above is used to form the catalytically active material. As the overall shape of the current carrier may remain unchanged upon the formation of the catalytically active material on the current carrier by the method described herein, so does the surface area that is defined above. Accordingly, the surface area of the electrode as used herein may be similar to the projected geometrical surface area of the current carrier. It may be determined by measuring the dimensions of the exposed surfaces of the electrode and calculating the overall surface area. The electrode of the present invention may have a surface area of greater than 100 $cm^2$, preferably greater than 500 $cm^2$, preferably greater than 1000 $cm^2$, preferably greater than 0.5 $m^2$, preferably greater than 1 $m^2$ and most preferably greater than 3 $m^2$.

The current carrier in the electrode of the present invention comprises a transition metal. The current carrier in the electrode may be a pure transition metal or a material comprising two or more elements, e.g. an alloy or an intermetallic compound as defined above, wherein at least one of these elements is a transition metal.

The catalytically active material that is comprised in the electrode of the present invention is impurity-free and comprises less than 5 mass %, preferably less than 2 mass %, more preferably less than 1 mass % and most preferably less than 0.5 mass % impurities. Impurities comprise components and phases other than one or more transition metal boride phases as defined above. Without wishing to be bound by any theory, impurities as defined herein may result from contamination during conventional synthesis methods as described above.

The catalytically active material that is comprised in the electrode of the present invention comprises one or more transition metal borides as described above.

The current carrier in the electrode of the present invention may be a sheet, a gauze, a lattice, a network or a foam as described above. More preferably, the current carrier is a sheet, a gauze or a foam.

Besides or in addition to the embodiment mentioned before, the catalytically active material that is comprised in the electrode of the present invention may be present as a layer on the current carrier covering at least a part of the current carrier surface as described above. The layer of the catalytically active material comprised in the electrode may optionally have a thickness of 0.1 - 500 $\mu$m, 0.2 - 100 $\mu$m, 0.5 - 20 $\mu$m or 1 - 10 $\mu$m, depending on the desired application for the same reasons as specified above in context with the method of forming the catalytically active material.

Moreover, the electrode of the present invention may not comprise a binder. It may therefore consist of the two- or three-dimensional current carrier and the catalytically active material.

Preferably, the current carrier in the electrode of the present invention is a sheet, a gauze, a lattice, a network or a foam as described above; the catalytically active material form a layer as specified above on the current carrier and optionally this layer has a thickness of 0.1 - 500 $\mu$m, 0.2 - 100 $\mu$m, 0.5 - 20 $\mu$m or 1 - 10 $\mu$m; and the electrode of the present invention does not comprise a binder. In a particularly preferred embodiment, the catalytically active material that is comprised in the electrode of the present invention may have a thickness of 1 -10 $\mu$m.

The transition metal comprised in the current carrier on which the catalytically active material is formed in the electrode of the invention may be one or more transition metals selected from Ni, Hf, W, Co, Fe, Mo, Ti, Zr, Nb, Ta. In a preferred embodiment, the transition metal may be Ni.

Besides or in addition to the embodiment mentioned before, the catalytically active material comprised in the electrode of the present invention may comprise one or more transition metal borides selected from metal-rich borides having a ratio of metal atoms to boron atoms of more than 1:4. The actual metal boride stoichiometry may vary in line with the application. However, in a preferred embodiment of the invention, the catalytically active material may comprise one or more selected from $M_3B$, $M_2B$, $M_4B_3$, MB, and $MB_2$, wherein M is the transition metal, more preferably one or more selected from $Ni_3B$, $Ni_2B$, $Ni_4B_3$, NiB, and $NiB_2$; $Hf_3B$, $Hf_2B$, $Hf_4B_3$, HfB, and $HfB_2$; $W_3B$, $W_2B$, $W_4B_3$, WB, and $WB_2$; $Co_3B$, $Co_2B$, $Co_4B_3$, CoB, and $CoB_2$; $Fe_3B$, $Fe_2B$, $Fe_4B_3$, FeB, and $FeB_2$; $Mo_3B$, $Mo_2B$, $Mo_4B_3$, MoB, and $MoB_2$; $Ti_3B$, $Ti_2B$, $Ti_4B_3$, TiB, and $TiB_2$; $Zr_3B$, $Zr_2B$, $Zr_4B_3$, ZrB, and $ZrB_2$; $Nb_3B$, $Nb_2B$, $Nb_4B_3$, NbB, and $NbB_2$; or $Ta_3B$, $Ta_2B$, $Ta_4B_3$, TaB, and $TaB_2$, even more preferably one or more selected from $Ni_3B$, $Ni_2B$, $Ni_4B_3$, and NiB, and most preferably $Ni_3B$.

In a preferred embodiment, the electrode of the present invention does not comprise a binder; the transition metal comprised in the current carrier of the electrode is one or more selected from Ni, Hf, W, Co, Fe, Mo, Ti, Zr, Nb, Ta; the catalytically active material of the electrode has a thickness of 0.1 - 500 $\mu$m, 0.2 - 100 $\mu$m, 0.5 - 20 $\mu$m or 1 - 10 $\mu$m and comprises one or more selected from $Ni_3B$, $Ni_2B$, $Ni_4B_3$, NiB, and $NiB_2$; $Hf_3B$, $Hf_2B$, $Hf_4B_3$, HfB, and $HfB_2$; $W_3B$, $W_2B$, $W_4B_3$, WB, and $WB_2$; $Co_3B$, $Co_2B$, $Co_4B_3$, CoB, and $CoB_2$; $Fe_3B$, $Fe_2B$, $Fe_4B_3$, FeB, and $FeB_2$; $Mo_3B$, $Mo_2B$, $Mo_4B_3$, MoB, and $MoB_2$; $Ti_3B$, $Ti_2B$, $Ti_4B_3$, TiB, and $TiB_2$; $Zr_3B$, $Zr_2B$, $Zr_4B_3$, ZrB, and $ZrB_2$; $Nb_3B$, $Nb_2B$, $Nb_4B_3$, NbB, and $NbB_2$; or $Ta_3B$, $Ta_2B$, $Ta_4B_3$, TaB, and $TaB_2$.

In a particularly preferred embodiment, the electrode of the present invention comprises an impurity-free catalytically active material layer having a thickness of 1 - 10 $\mu$m while comprising one or more selected from $Ni_3B$, $Ni_2B$, $Ni_4B_3$ and NiB (most preferably $Ni_3B$) formed without a binder on a current carrier metal foam comprising Ni.

The present invention also relates to an electrolyzer comprising the catalytically active material on a current carrier or the electrode as specified above. When the electrolyzer comprises the catalytically active material on a current carrier as defined above, this means that it comprises a catalytically active material on a current carrier obtained or obtainable from any of the methods of forming a catalytically active material on a two- or three-dimensional current carrier as described above. The electrolyzer of the present invention may thus be particularly suitable in large-scale applications. In general, an electrolyzer contains a cathode, an anode and a membrane.

In the electrolyzer of the present invention, two or more electrodes as described above may be connected in parallel or in series. Alternatively, or in addition, two or more, preferably two to six electrolyzers may be connected in parallel or in series for more efficient use of resources. An assembly of larger series or parallel arrays may include a variety of multiphase high voltage or high current sources, such as those found in industrial or utility applications.

Another aspect of the present invention relates to a method of catalysis using either the catalytically active material on a current carrier, the electrode comprising the catalytically active material or the electrolyzer comprising the electrode, each as specified above, alone or any combination thereof. When the method of catalysis uses the catalytically active material on a current carrier as defined above, this means that it uses a catalytically active material on a current carrier obtained or obtainable from any of the methods of forming a catalytically active material on a two- or three-dimensional current carrier as defined above. The method of catalysis may also comprise an initial step of forming a catalytically active material on a two- or three-dimensional current carrier as defined above.

The method of catalysis according to the present invention may comprise a step of contacting the catalytically active material as described herein in a cell with one or more reactants while passing current through the current carrier. Contacting means that the one or more reactants are able to touch the catalytically active material. The reactants as well as the reaction products may be gaseous or liquid and/or dissolved in the electrolyte solution. Preferably the reactant is liquid. In a particularly preferred embodiment, the reactant is water in the electrochemical splitting of water. Preferably the reaction product is gaseous. It may optionally be dissolved in the electrolyte solution. In a particularly preferred embodiment, the product of OER is oxygen.

The method of catalysis as described herein may be performed under alkaline or acidic conditions by using an alkaline or acidic electrolyte. In a particularly preferred embodiment, the catalysis is performed under alkaline conditions, e.g. by using an aqueous KOH solution, preferably an aqueous solution with a hydroxide concentration of 0.1 to 7.5 M. In lab scale, a solution with a hydroxide concentration of 0.1 to 2 M, more preferably of 0.5 to 1.5 M and most preferably of 1 M may be used. On an industrial scale a hydroxide concentration of up to 7.5 M may be used, preferably 6.5 to 7.5 M, preferably 6.9 M. Alkaline electrolysis may be performed at room temperature in lab scale and on an industrial scale at temperatures in the range of 70 - 90 °C, preferably 75 - 85 °C. However, catalysis may also be performed under acidic conditions, e.g. by using an aqueous $HClO_4$ solution or $H_2SO_4$ solution, preferably an aqueous solution with a proton concentration of 0.1 to 7.5 M. In lab scale, a solution with a proton concentration of 0.03 to 2 M, more preferably of 0.6 to 1.5 M and most preferably of 0.9 to 1 M is used.

The cell used in the method of catalysis comprises at least two electrodes, i.e. an anode where the oxidation takes place and a cathode where the reduction takes place. At least one of the electrodes and preferably the anode comprises the catalytically active material of the invention. For electrochemical testing, a three-electrode cell comprising a working electrode, a reference electrode and a counter electrode may be used. The catalytically active material may be used as working electrode. In a particularly preferred embodiment, the reference electrode may comprise Hg/HgO and preferably may be a Hg/HgO electrode, while the counter electrode may comprise Pt and preferably may be Pt.

The current applied to the current carrier during the method of catalysis according to the present invention may be a direct current or an alternating current, preferably a direct current. The applied potential may be in the range 1.2 - 1.6 V versus reversible hydrogen electrode.

It has been found that in the absence of a binder the lifetime of an electrode comprising one or more transition metal borides as well as the mechanical and chemical stability depend only on the contact between the current carrier and the catalytically active material. Hence, the method of catalysis using the catalytically active material formed as described herein provides a system for use in catalysis that is easy to control.

The method of catalysis according to the present invention encompasses electrocatalysis. Electrocatalysis can be defined as the heterogeneous catalysis of electrochemical reactions, which occur at the interface between an electrolyte and an electrode where the electrode surface acts as electrocatalyst. An electrocatalytic application in the sense of the present invention may comprise different variants of EWS in general by using AELs, SOELs and SPELs. The latter can be realized in PEM, AEM or BPM electrolysers. Independently on the type of electrolyser EWS involves two corresponding half reactions in: the evolution of oxygen in the OER at the anode or the hydrogen evolution in the HER at the cathode. Moreover, an electrocatalytic application in the sense of the present invention may comprise the oxygen reduction reaction (ORR), a half reaction in the electrocatalytic formation of water or hydrogen peroxide, as well as further electrocatalytic reactions, e.g. methanol oxidation, ethanol oxidation, formic acid oxidation, $CO_2$ reduction or the nitrogen reduction reaction (NRR), which enables the production of ammonia at ambient conditions from $N_2$ and $H_2O$.

In a preferred embodiment the method of catalysis in the present invention is the OER. In this embodiment, the catalysis is performed under alkaline condition as specified above.

The present invention also relates to a method of first forming a catalytically active material on a two- or three-dimensional current carrier as described in detail above followed by a method of carrying out the catalysis according to the present invention.

Furthermore, the present invention relates to the use in catalysis of either the catalytically active material on a current carrier, the electrode comprising the catalytically active material or the electrolyzer comprising the electrode, each as specified above, alone or any combination thereof.

The use in catalysis according to the present invention means that the catalytically active material acts as a catalyst as defined above. It may encompass any electrocatalysis or heterogenous catalysis as described above for the method of catalysis according to the present invention. Preferably, the use is catalysis in the OER.

**Experimental Part**

The method of the present invention of forming a catalytically active material was investigated on a nickel foam as current carrier with $BBr_3$ as gaseous boron halide in line with A. Henschel et al., Chem. Eur. J. 2017, 23, 15869. The following data provides a suitable exemplary system as first proof of principle for the present method.

**Measuring Methods**

**Powder X-Ray Diffraction (PXRD)**

Analysis of the crystal structure of the catalytically active material may be performed by PXRD in transmission mode or XRD in reflection mode. The latter can be applied if catalytically active materials is on the current carrier in the form of sheet. By using the method of PXRD, a diffraction pattern may be obtained from a powder of a material as follows. After grinding of the catalytically active material, the PXRD measurements of the obtained samples were performed by means of the Guinier technique (Huber Image Plate Guinier camera G670, $CuK_{\alpha 1}$ radiation, $\lambda$ = 1.54056 Å, $3° \leq 2\theta \leq 100°$). The qualitative phase analysis is performed via comparison of experimentally obtained PXRD pattern with the calculated one using WinXPOW program. The calculated PXRD patterns are obtained using the crystallographic data, available in scientific publications or databases (ICSD, CRYSTMET, etc.). For the refinement of the lattice parameters, $LaB_6$ (99.0 %, ABCR, a = 4.1569162 Å $\pm$ 9.7$\cdot 10^{-6}$ Å) was used as the internal standard. The lattice parameters were refined by means of least-square method implemented in the program package WinCSD.

**Scanning Electron Microscopy (SEM)**

The morphology and phase distribution in the prepared samples was investigated via scanning electron microscopy (SEM). The SEM images are obtained by scanning the surface with a focused beam of electrons. The electrons interact with atoms in the sample, producing various signals that contain information about the surface topography and composition of the sample. SEM images may be measured via detection of back-scattered electrons (BSE, beam electrons that are reflected from the sample). The intensity of the BSE signal is strongly related to the atomic number (Z) of the specimen. Hence, BSE images can provide information about the distribution of different phases in the sample. BSE are generally used in analytical SEM, along with the spectra made from the characteristic X-rays. The size of the interaction volume (depth of SEM analysis) depends on the applied acceleration voltage, the atomic number of the specimen and the specimen's density. In the present invention SEM images were taken with 5 kV beam acceleration voltage using scanning electron microscope JEOL JSM-7800F with energy-dispersive X-ray spectroscopy (EDXS) system (Quantax 400, Bruker, Silicon-Drift-Detector (SDD)).

**Formation of the Catalytically Active Material**

**Comparative Sample 1**

An unmodified Ni foam shaped into the pellet-like specimen (thickness: 2.5 mm, diameter: 8 mm), with a pore size of 800 μm corresponding to the current carrier used to prepare Sample 1 below was used. Accordingly, no catalytically active material formed as specified above was present in the current carrier of Comparative Sample 1.

**Sample 1**

A Ni foam having a pellet-like shape (thickness: 2.5 mm thick, diameter: 8 mm) and a pore size of 800 μm was selected as a current carrier and placed in a quartz tube using a glassy carbon crucible. The quartz tube, in turn, was placed in a high-frequency induction furnace (HFO). The complete line was evacuated for about 1 h down to a pressure of $5 \times 10^{-3}$ mbar. The foam was heated up to 800 °C (monitored by a pyrometer) and kept at this temperature for 10 minutes. The sample was exposed to $BBr_3$ vapour three times for periods of 5 to 10 seconds and subjected to an evacuation step in between. Afterwards, the system comprising the heated sample was evacuated for additional 5 minutes with the heated sample and again for 15 minutes after switching off the HFO furnace.

**Characterization of the Catalytically Active Material**

By the method of the present invention, $Ni_3B$ has been obtained by using a Ni current carrier. By additionally varying the holding time and partial pressure of the gaseous boron halide, the depth of reaction (thickness of boride layer) can be tailored. When increasing the holding time and partial pressure of the gaseous boron halide, for instance, the thickness of the transition metal boride layer may increase, and the number of borides may change from one boride to a two- or multiphase material.

The exemplarily PXRD pattern of Sample 1 is presented in Figure 1. In addition to the main reflections of elemental Ni (*fcc,* space group *Fm3m, a* = 3.524 Å [A. Taylor, J. Institute Met. 77 (1950) 585]), the remaining reflections can be indexed with the orthorhombic structure of $Ni_3B$ ($Fe_3C$-type, space group *Pnma, a* = 5.2219 Å, *b* = 6.6171 Å, c = 4.3918 Å [R. Gumeniuk et al. Z. Kristallogr. NCS 221 (2006) 425]). The SEM image that is shown in the inset of Figure 1 confirms the presence of two distinguishable different phases (Ni as current carrier and $Ni_3B$ as catalytically active material).

These results confirm the potential of the method described in detail herein for preparing transition metal boride layers on a foam current carrier comprising a transition metal. The fact that this process can be applied to complex shapes such as foams demonstrates that it can also be employed on an industrial scale.

**Electrochemical Testing**

The electrochemical experiments were performed by using a three-electrode electrochemical cell. The electrolyte was 1 M KOH. Prior to the experiments, the electrolyte was purged with argon for electrolyte deaeration for 10 - 15 minutes. Sample 1 or Comparative Sample 1 was used as working electrode, Hg/HgO (PINE research, standard 9.5 mm OD) was used as reference electrode and a Pt wire (99.99 % Pt, mounted at the end of chemically-resistant epoxy rod by PINE research) was used as counter electrode. The initial assessment of the OER activity using linear sweep voltammetry (LSV, scan rate of 10 mV s$^{-1}$) was followed by a cyclic voltammetry pre-treatment (CV, *E* = 0.3-0.63 V vs. Hg/HgO, scan rate of 50 mV s$^{-1}$, 50 cycles) and finalized by another OER activity estimation (LSV, scan rate 5 mV s$^{-1}$).

**Results**

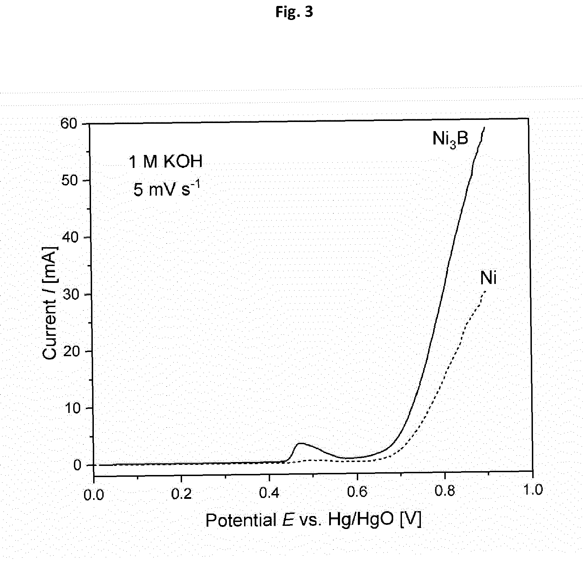

The LSV curves after the CV pre-treatment of Sample 1 as well as of Comparative Sample 1 are presented in Figure 3. Two important features are obvious:

(i) the OER onset potentials are comparable whereas the currents obtained by using Sample 1 as anode are twice as high as those obtained by using Comparative Sample 1 as anode;
(ii) the broad oxidation peak in the potential range 0.43-0.56 V vs. Hg/HgO is very pronounced in the case of Sample 1.

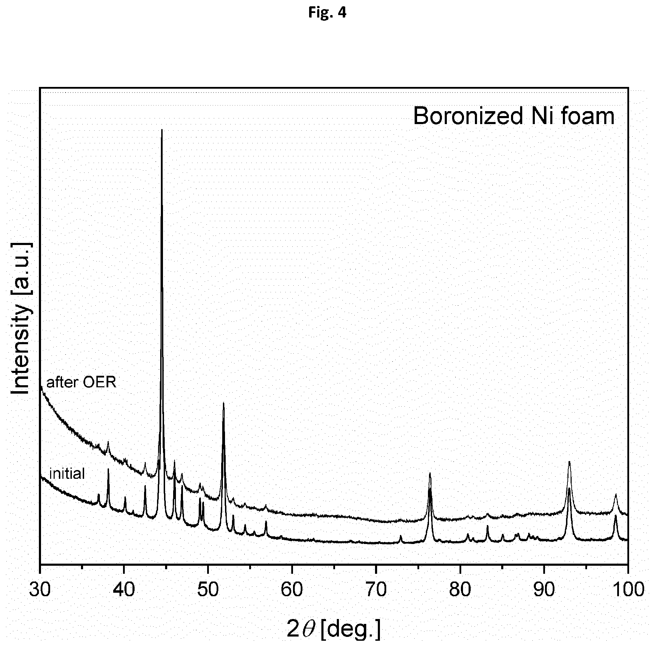

The oxidative conditions of OER reaction (alkaline solution, evolved oxygen), accompanied by the application of anodic potentials, generally lead to structural changes in the bulk or at least in the surface region of electrodes. Therefore, the characterization of the active material after electrochemical experiments is of huge importance. The PXRD results of Sample 1 after electrochemical testing do not differ from those before electrochemical experiment (see Fig. 4). SEM combined with an elemental mapping reveals preservation of the $Ni_3B$ layer on the Ni foam after the electrochemical experiment (Fig. 2).

**Discussion**

The method of the present invention is a new approach to a wide range of stable heterogeneous catalysts (particularly, electrocatalysts) having improved activity and/or stability. Most importantly, the method of the present invention is suitable for use on a large scale so can be used in industrial applications.

Different compositions and crystal structures of borides, a wide range in thickness and microstructures of the boride layer can be achieved by varying the experimental conditions when forming the catalytically active material on the current carrier. Thus, the present invention also allows the use of various current carrier materials, e.g. commercially available Ni-containing alloys.

By the method of the present invention, the catalyst is directly formed on surface of the current carrier in one step without using a binder and contact materials, thus providing a simple, quick and efficient technique for preparation of the catalytically active material on a large scale. Moreover, the method described herein shows a high tolerance for varying the shape of the current carrier substrate.

Due to the limited number of components, the method of the present invention also provides a system for use in catalysis that is easy to control.

**Claims**

1.  A method of forming a catalytically active material on a two- or three-dimensional current carrier,

    wherein the current carrier comprises a transition metal,
    wherein the method comprises a step of contacting the current carrier in a heated state with gaseous boron halide to react the boron halide with the transition metal.

2.  The method of claim 1, wherein the current carrier is a sheet, a lattice, a network, a foam or a gauze.

3.  The method of claim 1 or 2, wherein the current carrier has a surface area of 100 cm$^2$ or more.

4.  The method of claim 1, 2, or 3, wherein

    a) the current carrier is heated by an electrical current, and/or
    b) the temperature of the current carrier is 500 - 2000 °C, optionally 800 - 1200 °C.

5.  The method of claim 1, 2, 3, or 4, wherein

    a) the boron halide has a vapour pressure of 1 mbar -1 bar,

       the boron halide is optionally present in a mixture with an inert gas, and
       the inert gas optionally has a vapour pressure of 1 mbar - 1 bar; and/or

    b) the current carrier is exposed to the gaseous boron halide for 5 seconds - 220 minutes.

6.  The method of claim 1, 2, 3, 4, or 5, wherein

    a) the method is continuous; and/or
    b) the method is carried out in a single step; and/or
    c) the method does not use a binder; and/or
    d) the method does not use a crucible.

7.  The method of claim 1, 2, 3, 4, 5, or 6, wherein

    a) the catalytically active material comprises one or more transition metal borides; and/or
    b) the catalytically active material is impurity-free; and/or
    c) the catalytically active material is present as a layer on the current carrier, wherein the layer is optionally 0.1 - 500 $\mu$m thick.

8.  The method of claim 1, 2, 3, 4, 5, 6, or 7 wherein:

    a) the transition metal is one or more elements selected from groups 3 to 12 of the periodic table of elements, more preferably one or more selected from Ni, Hf, W, Co, Fe, Mo, Ti, Zr, Nb, Ta; and/or
    b) the boron halide is one or more selected from $BCl_3$, $BBr_3$, and $BI_3$; and/or
    c) the catalytically active material comprises one or more selected from $M_3B$, $M_2B$, $M_4B_3$, MB, and $MB_2$, wherein M is the transition metal;
    optionally wherein the catalytically active material comprises one or more selected from $Ni_3B$, $Ni_2B$, $Ni_4B_3$, and NiB.

9.  An electrode comprising a catalytically active material on a two- or three-dimensional current carrier,

wherein the current carrier has a surface area of 100 cm$^2$ or more,
wherein the current carrier comprises a transition metal,
wherein the catalytically active material is impurity-free and comprises one or more transition metal borides.

10. The electrode according to claim 9, wherein

a) the current carrier is a sheet, a lattice, a network, a foam or a gauze; and/or
b) the catalytically active material forms a layer on the current carrier, wherein the layer is optionally 0.1 - 500 μm thick; and/or
c) the electrode does not comprise a binder.

11. The electrode of claim 9 or 10 wherein:

a) the transition metal is one or more selected from Ni, Hf, W, Co, Fe, Mo, Ti, Zr, Nb, Ta; and/or
b) the catalytically active material comprises one or more selected from the group of $M_3B$, $M_2B$, $M_4B_3$, MB, $MB_2$, wherein M is the transition metal,
optionally wherein the catalytically active material comprises one or more selected from $Ni_3B$, $Ni_2B$, $Ni_4B_3$, or NiB.

12. An electrolyzer comprising the catalytically active material on a current carrier of claim 1, 2, 3, 4, 5, 6, 7, or 8, or the electrode of claim 9, 10, or 11.

13. Method of catalysis using

the catalytically active material on the current carrier of claim 1, 2, 3, 4, 5, 6, 7, or 8;
the electrode of claim 9, 10, or 11; or
the electrolyzer of claim 12;
wherein the method comprises the step of contacting the catalytically active material with one or more reactants while passing current through the current carrier.

14. Use in catalysis of the catalytically active material on a current carrier in claim 1, 2, 3, 4, 5, 6, 7, or 8; the electrode of claim 9, 10, or 11; or the electrolyzer of claim 12.

15. The method of claim 13 or the use of claim 14 wherein the catalysis comprises the oxygen evolution reaction.

EP 4 215 644 A1

**Fig. 1**

**Fig. 2**

**Fig. 3**

**Fig. 4**

Europäisches
Patentamt
European
Patent Office
Office européen
des brevets

**EUROPEAN SEARCH REPORT**

Application Number

EP 22 15 2216

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Campbell I. E. ET AL: "The Vapor-Phase Deposition of Refractory Materials: I. General Conditions and Apparatus", J. Electrochem. Soc., 7 May 1949 (1949-05-07), pages 318-333, XP55937236, DOI: 10.1149/1.2776795 Retrieved from the Internet: URL:https://iopscience.iop.org/article/10.1149/1.2776795 [retrieved on 2022-06-30] | 1,2,4-8 | INV. C25B1/04 C25B11/052 C25B11/054 C25B11/061 C25B11/075 B01J23/755 C01B35/04 B01J35/00 B01J37/02 B01J37/08 |
| Y | * the whole document * | 9-11 | B01J37/34 |
| Y | FR 2 067 802 A5 (PARIS RENE) 20 August 1971 (1971-08-20) * the whole document * | 9-11 | |
| X,D | HENSCHEL ANNE ET AL: "Crucible-Free Preparation of Transition-Metal Borides: HfB 2", CHEMISTRY – A EUROPEAN JOURNAL, [Online] vol. 23, no. 63, 10 August 2017 (2017-08-10), pages 15869-15873, XP55936775, DE ISSN: 0947-6539, DOI: 10.1002/chem.201703181 Retrieved from the Internet: URL:https://api.wiley.com/onlinelibrary/tdm/v1/articles/10.1002%2Fchem.201703181> [retrieved on 2022-06-30] | 1-8 | |
| | | | TECHNICAL FIELDS SEARCHED (IPC) |
| | | | C25B C01B B01J |
| Y | * the whole document * | 9-15 | |

-/--

The present search report has been drawn up for all claims

| Place of search | Date of completion of the search | Examiner |
|---|---|---|
| Munich | 5 July 2022 | Thorner, Gentien |

EPO FORM 1503 03.82 (P04C01)

**EUROPEAN SEARCH REPORT**

Application Number

**EP 22 15 2216**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y,D | GUO FEIFAN ET AL: "High-performance oxygen evolution electrocatalysis by boronized metal sheets with self-functionalized surfaces", ENERGY & ENVIRONMENTAL SCIENCE, vol. 12, no. 2, 9 January 2019 (2019-01-09), pages 684-692, XP55937206, Cambridge ISSN: 1754-5692, DOI: 10.1039/C8EE03405B * the whole document * ----- | 9-15 | |

TECHNICAL FIELDS
SEARCHED      (IPC)

The present search report has been drawn up for all claims

| Place of search | Date of completion of the search | Examiner |
|---|---|---|
| Munich | 5 July 2022 | Thorner, Gentien |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

page 2 of 2

## ANNEX TO THE EUROPEAN SEARCH REPORT
## ON EUROPEAN PATENT APPLICATION NO.

EP 22 15 2216

This annex lists the patent family members relating to the patent documents cited in the above-mentioned European search report.
The members are as contained in the European Patent Office EDP file on
The European Patent Office is in no way liable for these particulars which are merely given for the purpose of information.

05-07-2022

| Patent document cited in search report | Publication date | Patent family member(s) | Publication date |
|---|---|---|---|
| FR 2067802 A5 | 20-08-1971 | NONE | |

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20120152734 A

### Non-patent literature cited in the description

- **A. SEROV et al.** *Johnson Matthey Technol. Rev.,* 2021, vol. 65, 207
- **T. REIER et al.** *Adv. Energy Mater.,* 2017, vol. 7, 1601275
- **F. GUO et al.** *Energy Environ. Sci.,* 2019, vol. 12, 684
- **A. HENSCHEL et al.** *Chem. Eur. J.,* 2017, vol. 23, 15869
- **A. TAYLOR.** *J. Institute Met.,* 1950, vol. 77, 585
- **R. GUMENIUK et al.** *Z. Kristallogr. NCS,* 2006, vol. 221, 425